# EUROPEAN PATENT APPLICATION

(11) **EP 0 922 986 A2**
(43) Date of publication of application: **16.06.1999**
(21) Application number: 98123305.9
(22) Date of filing: 08.12.1998
(51) Int. Cl.: G02B 27/18

(54) **Controllable image projector**

(30) Priority: 09.12.1997 IL 12253497
(71) Applicant: UNIC VIEW LTD., 42504 Netanya (IL)
(72) Inventor: Barak, Shlomo, Rishon le Zion 75258 (IL); Eizenbach, Shlomo, Moshav Kfar Pines 37920 (DE)
(74) Representative: Schupfner, Gerhard D.

(57) **Abstract**

This invention discloses a projector including a light source (10), a polarizing beam splitter (12) receiving light from the light source, a first color splitter (22) receiving light of a first polarity (18) from the polarizing beam splitter, a second color splitter (24) receiving light of a second polarity (20) from the polarizing beam splitter, first, second and third reflective light valves (30,32,34) operatively associated with the first color splitter for modulating respective R, G and B components of light of the first polarity, fourth, fifth and sixth reflective light valves (40,42,44) operatively associated with the second color splitter for modulating respective R, G and B components of light of the second polarity, and an objective lens (70) arranged to receive light reflected the first, second, third, fourth, fifth and sixth reflective light valves.

## Description

### FIELD OF THE INVENTION

The present invention relates to projectors generally and more particularly to controllable image projectors.

### BACKGROUND OF THE INVENTION

Conventional electronically-controlled image projectors are characterized in that their light efficiency is substantially less than optimal. Conventional image projectors which employ polarization dependent light valves generally do not utilize light of both polarities. These and other types of conventional image projectors do not efficiently utilize the light emitted by a light source, due to the fact that they employ spectral color separation methods which involve substantial absorption of spectrally complementary components of the light passing therethrough and due to the fact that they utilize a long optical path.

### SUMMARY OF THE INVENTION

The present invention seeks to provide a projector which overcomes the disadvantages of the prior art and has additional unexpected features which enable projection of images which appear to be three dimensional.

There is thus provided in accordance with a preferred embodiment of the present invention a projector comprising:
a light source;
a polarizing beam splitter receiving light from the light source;
a first color splitter receiving light of a first polarity from the polarizing beam splitter;
a second color splitter receiving light of a second polarity from the polarizing beam splitter;
first, second and third reflective light valves operatively associated with the first color splitter for modulating respective R, G and B components of light of the first polarity;
fourth, fifth and sixth reflective light valves operatively associated with the second color splitter for modulating respective R, G and B components of light of the second polarity; and
an objective lens arranged to receive light reflected via the first, second, third, fourth, fifth and sixth reflective light valves.

In accordance with a preferred embodiment of the present invention, the polarizing beam splitter includes first and second prisms separated by a liquid crystal material.

Further in accordance with a preferred embodiment of the present invention, the first and second color splitters are mutually rotated by 90 degrees about their optical axis.

Additionally in accordance with this preferred embodiment of the invention, the first, second and third light valves are rotated about their respective optical axes relative to the fourth, fifth and sixth light valves respectively by 90 degrees.

Alternatively, the projector includes a half wave plate disposed between one of the first and second color splitters and the polarizing beam splitter.

Alternatively, the first and second color splitters comprise first and second total internal reflection dichroic RGB separator/combiners.

In accordance with one embodiment of the present invention, the first, second and third light valves are operative to modulate a first image corresponding to a right eye image of a stereo image and the fourth, fifth and sixth light valves are operative to modulate a second image corresponding to a left eye image of a stereo image.

Alternatively, the first, second and third light valves are operative to modulate a first image portion and the fourth, fifth and sixth light valves are operative to modulate a second image portion, wherein the first, second and third light valves are positioned relative to the fourth, fifth and sixth light valves and to the polarizing beam splitter so as to cause the first and second image portions to be interlaced.

In accordance with a preferred embodiment of the present invention, the first and second color splitters and the polarizing beam splitter also function as combiners.

### BRIEF DESCRIPTION OF THE DRAWINGS

The present invention will be understood and appreciated more fully from the following detailed description, taken in conjunction with the drawings in which:
Fig. 1 is a simplified pictorial illustration of a projector constructed and operative in accordance with an embodiment of the present invention;
Fig. 2 is a simplified pictorial illustration of a projector constructed and operative in accordance with another preferred embodiment of the present invention;
Fig. 3 is a simplified top view illustration of the projector of Fig. 2;
Fig. 4 is a simplified pictorial illustration of three-dimensional projection in accordance with a preferred embodiment of the present invention;
Fig. 5 is a simplified pictorial illustration of interlaced projection in accordance with a preferred embodiment of the present invention;
Fig. 6 is a simplified pictorial illustration of a projector constructed and operative in accordance with a preferred embodiment of the present invention; and
Fig. 7 is a plan view illustration of a total internal reflection dichroic RGB separator/combiner type of color splitter/combiner useful in the embodiment of Fig. 6.

### DETAILED DESCRIPTION OF PREFERRED EMBODIMENTS

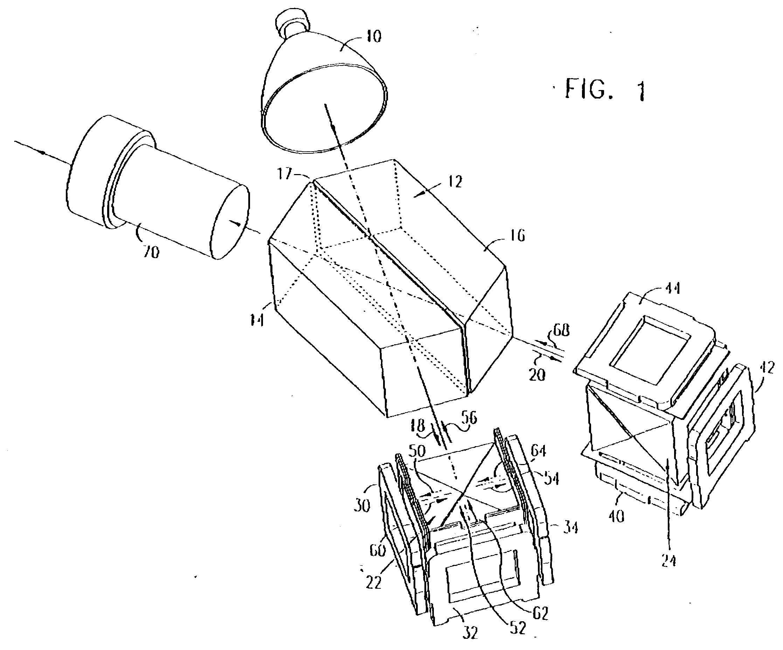

Reference is now made to Fig. 1, which illustrates a projector constructed and operative in accordance with an embodiment of the present invention. The projection preferably comprises a non-polarized light source 10, such as an arc lamp based illuminator, which directs a beam of light onto a polarizing beam splitter/combiner 12.

Preferably, the polarizing beam splitter/combiner 12 comprises first and second prisms 14 and 16 separated by a liquid crystal material 17. Alternatively, the polarizing beam splitter may comprise Glen-Thompson or Wollaston prisms which are commercially available from Melles Griot or Spindler & Hoyer. As a further alternative, the polarizing beam splitter may be a conventional broad-band polarizing beam splitter comprising plural prisms which are separated by multilayer optical coatings.

The polarizing beam splitter 12 is operative to split the light impinging thereon from light source 10 into two preferably differently polarized beams, 18 and 20 which impinge on first and second color splitters 22 and 24 respectively. Color splitters 22 and 24 may be conventional color splitters, which are commercially available from C.V.I. Laser Corporation of Albuquerque, New Mexico, U.S.A.

The first color splitter 22 thus receives light of a first polarity from the polarizing beam splitter 12, while the second color splitter 24 receives light of a second polarity, typically, but not necessarily, orthogonal to said first polarity, from the polarizing beam splitter 12.

In accordance with a preferred embodiment of the present invention, there are provided first, second and third reflective light valves 30, 32 and 34 operatively associated with the first color splitter 22 for modulating respective R, G and B components of light of the first polarity. There are also provided fourth, fifth and sixth reflective light valves 40, 42 and 44 operatively associated with the second color splitter 24 for modulating respective R, G and B components of light of the second polarity.

Light valves 30, 32, 34, 40, 42 and 44 are commercially available from S-Vision Inc. of Santa Clara, California, U.S.A.

It is appreciated that the modulation produced by the light valves 30, 32, 34 on the one hand, and light valves 40, 42 and 44 on the other, may be such that time-interlaced modulation of images is provided. Such time-interlaced modulation may be employed, for example, for projecting time-interlaced stereo images which can be viewed by persons wearing glasses having time-interlaced shutters.

It is appreciated that the first and second color splitters 22 and 24 operate not only as color splitters but also as color combiners.

As may be appreciated from a consideration of Fig. 1, first color splitter 22 is operative to spectrally split beam 18 into R, G and B components, respectively indicated by arrows 50, 52 and 54. These components impinge on respective reflective light valves 30, 32 and 34 which modulate the light impinging thereon and reflect the modulated light beams, respectively indicated by arrows 60, 62 and 64 back through the first color splitter 22, which combines the modulated components and transmit a combined beam, indicated by arrow 56, back to polarizing beam splitter/combiner 12.

Similarly, second color splitter 24 is operative to spectrally split beam 20 into R, G and B components. These components impinge on respective reflective light valves 40, 42 and 44 which modulate the light impinging thereon and reflect it back through the second color splitter 24, which combines the modulated components and transmit a combined beam, indicated by arrow 68, back to polarizing beam splitter/combiner 12.

It is noted that in the embodiment of Fig. 1, the first, second and third light valves are rotated about their respective optical axes relative to said fourth, fifth and sixth light valves respectively by 90 degrees and the first and second color splitters are rotated relative to each other about their respective optical axes by 90 degrees.

It is to be noted that throughout the description and claims, that the designations first, second, third, etc. and the reference numerals assigned to given beam splitters and light valves are arbitrary and are for the purposes of illustration only. They are not intended to be limiting or to identify a given polarity or color with a given position or orientation of or relative to a beam splitter or light valve.

The polarizing beam splitter/combiner combines beams 66 and 68 and directs them to an objective lens 70, which outputs the combined modulated light beams.

The present invention, a preferred embodiment of which is described hereinabove, has a number of advantages over the prior art:

It utilizes both polarized components of the light from the light source as well as the full spectrum of the light. Thus, the percentage of the light emitted by the light source that is outputted exceeds chat conventionally realized in the prior art.

The use of reflective light valves provides greater efficiency than would be achieved using transmissive light valves since it avoids the obscuration produced by the black matrix of the transistors used therein and shortens the optical path. Also, the utilization of a polarizing beam splitter obviates the need for polarizers usually associated with a liquid crystal light valve.

Operation in a reflective mode enables the beam splitters to be used as beam combiners, thus reducing the number of components and the overall size and weight of the projector.

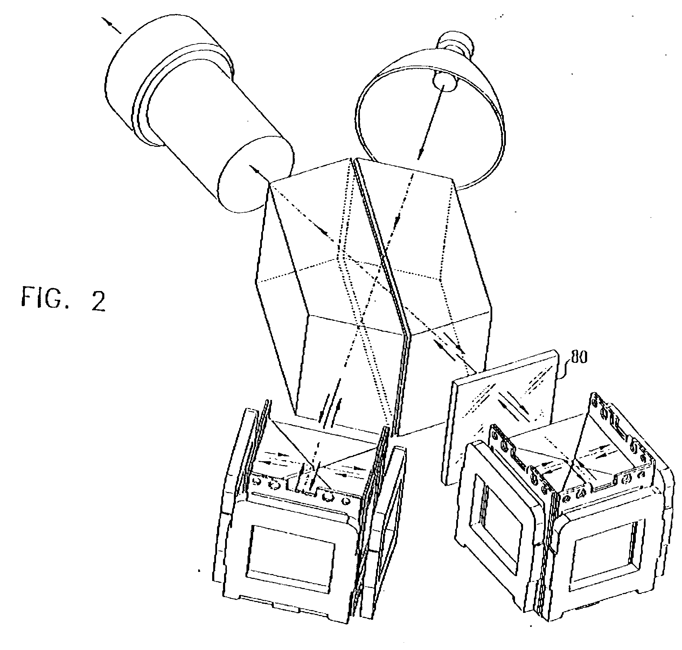

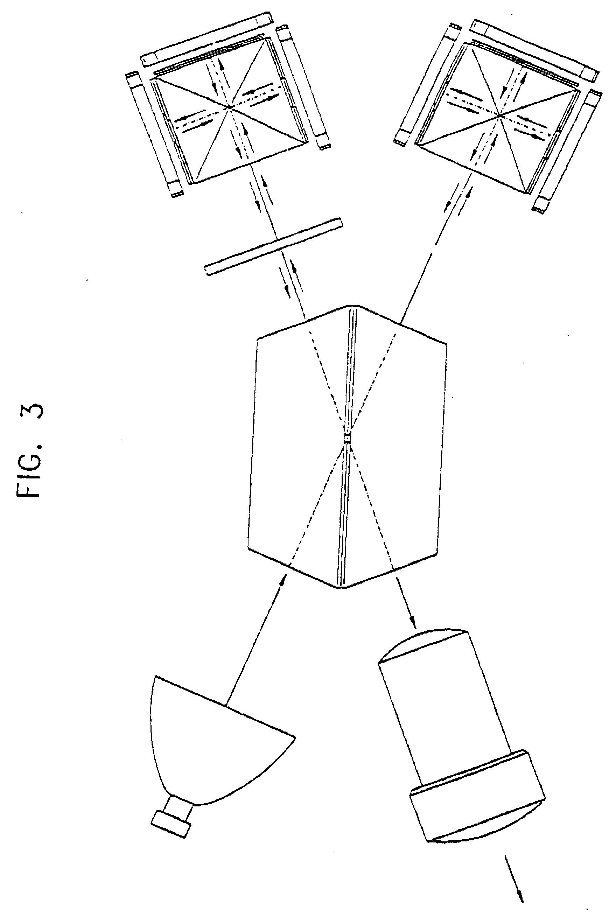

Reference is now made to Figs. 2 and 3, which illustrate a projector in accordance with another preferred embodiment of the present invention. The embodiment of Figs. 2 and 3 is identical to that of Fig. 1 other than in that in the embodiment of Figs. 2 and 3, the first, second and third light valves are not rotated about their respective optical axes relative to said fourth, fifth and sixth light valves respectively by 90 degrees.

Instead, a half wave plate 80 may be disposed between one of said first and second color splitters and said polarizing beam splitter in order to rotate the polarity of the light passing through the half wave plate by 90 degrees. Alternatively in cases where both light outputs from the polarizing beam splitter 12 are parallel, the half-wave plate 80 need not be employed.

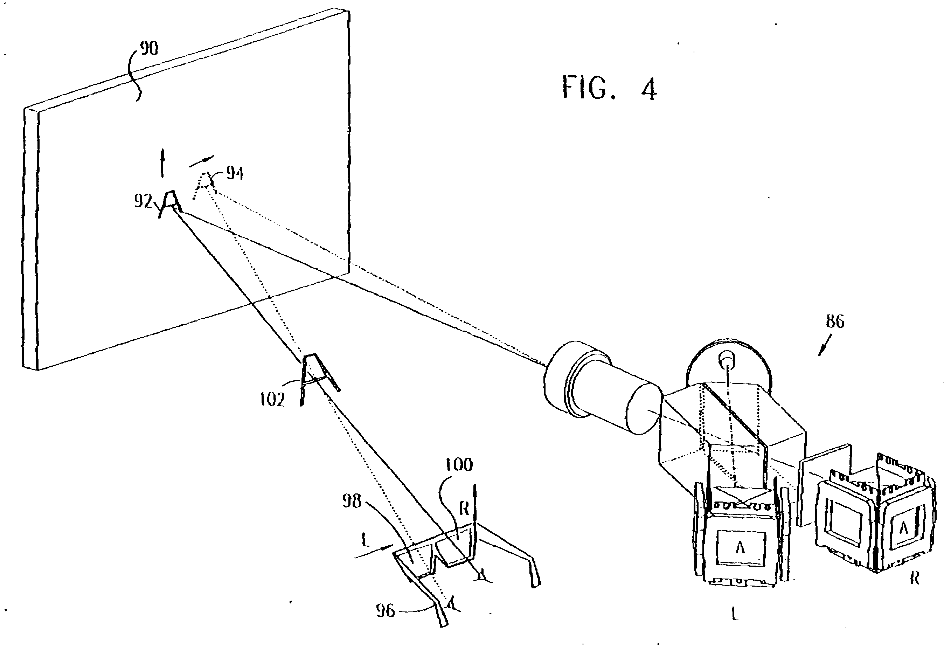

Reference is now made to Fig. 4, which is a simplified pictorial illustration of three-dimensional projection in accordance with a preferred embodiment of the present invention. The system of Fig. 4 may employ a projector 86 of the type described hereinabove with reference to any of Figs. 1 - 3.

A first color splitter 22, with associated light valves 30, 32 and 34, may be operative to modulate an image intended for a viewer's left eye, while a second color splitter 24, with associated light valves 40, 42 and 44, may be operative to modulate an image intended for a viewer's right eye, or vice versa.

The combined image projected via the objective lens 70 appears on a suitable, polarization retaining screen 90 as two mutually orthogonally polarized images 92 and 94. A viewer, wearing glasses 96 having left and right lenses 98 and 100 having mutually orthogonal polarization, sees the image, here a letter "A" 102, in three dimensions, as if it were coming out of the screen 90.

In an alternative embodiment of the invention wherein time-interlaced stereo projection is provided, glasses 96 may contain time-interlaced shutters for enabling different eyes of the viewer to see different images.

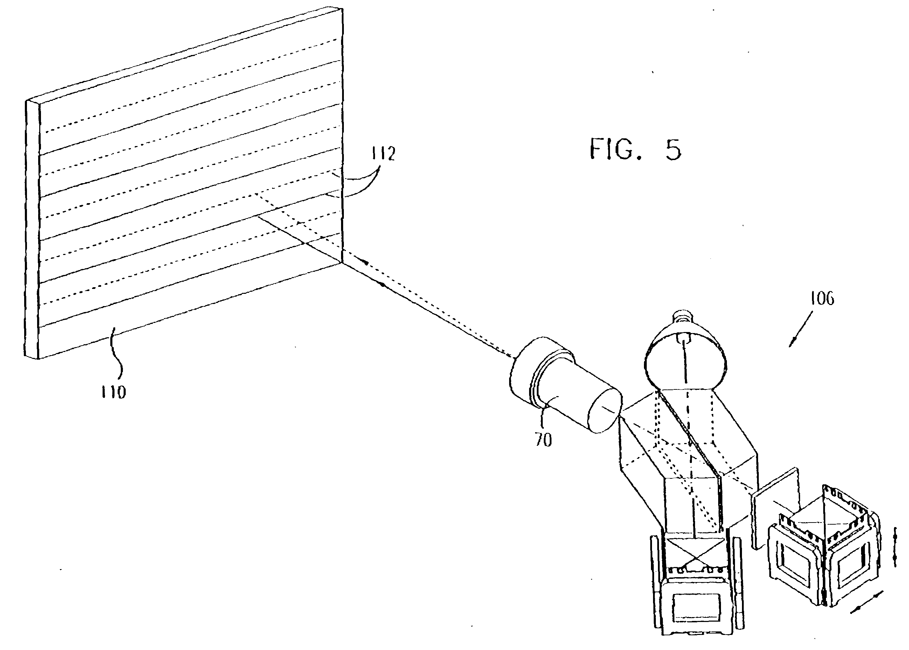

Reference is now made to Fig. 5, which is a simplified pictorial illustration of interlaced projection in accordance with a preferred embodiment of the present invention. The system of Fig. 5 may employ a projector 106 of the type described hereinabove with reference to any of Figs. 1 - 3.

A first color splitter 22, with associated light valves 30, 32 and 34, may be operative to modulate a first spaced series of lines of an image, while a second color splitter 24, with associated light valves 40, 42 and 44, may be operative to modulate a second spaced series of lines of the image, interlaced with the first series of lines.

The combined image projected via the objective lens 70 appears on a screen 110 as a combined interlaced image. It is appreciated that the lines 112 need not be horizontal as shown, but may instead be vertical or in any other suitable interlaced pattern. It is also appreciated that the features of Figs. 4 and may be readily combined to provide interlaced three-dimensional projection.

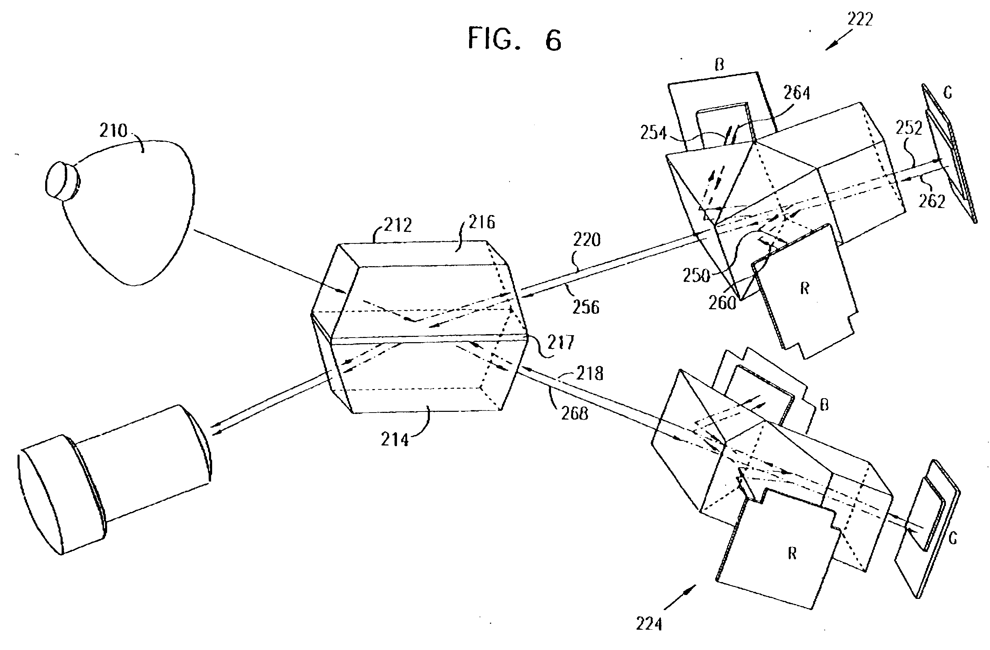

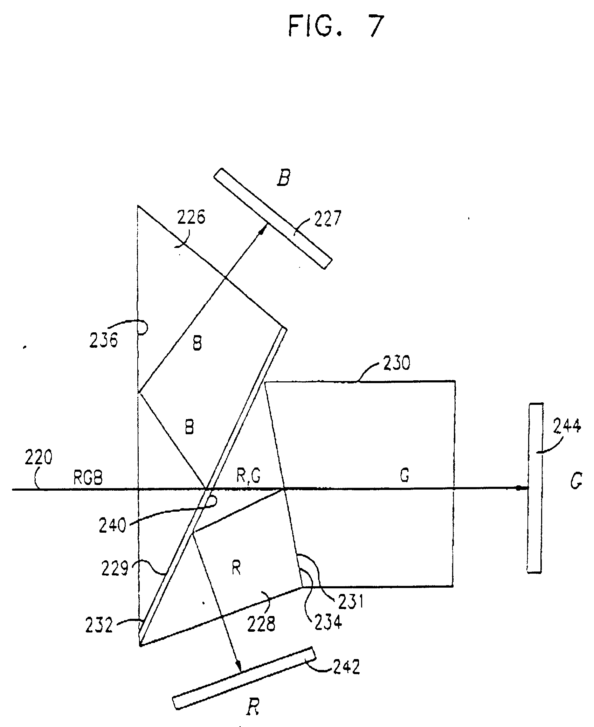

Reference is now made to Figs. 6 and 7, which illustrates a projector constructed and operative in accordance with a preferred embodiment of the present invention. The projection preferably comprises a non-polarized light source 210, such as an arc lamp based illuminator, which directs a beam of light onto a polarizing beam splitter/combiner 212.

Preferably, the polarizing beam splitter/combiner 212 comprises first and second prisms 214 and 216 separated by a liquid crystal material 217. Alternatively, the polarizing beam splitter may comprise Glen-Thompson or Wollaston prisms which are commercially available from Melles Griot or Spindler & Hoyer. As a further alternative, the polarizing beam splitter may be a conventional broad-band polarizing beam splitter comprising plural prisms which are separated by multilayer optical coatings.

The polarizing beam splitter 212 is operative to split the light impinging thereon from light source 210 into two preferably differently polarized beams, 218 and 220 which impinge on color splitters in the form of first and second identical total internal reflection dichroic RGB separator/combiners 222 and 224 respectively.

As seen particularly in Fig. 7, each of first and second identical total internal reflection dichroic RGB separator/combiners 222 and 224 preferably comprises first, second and third glass prisms 226, 228 and 230 which are preferably configured such that the light paths extending therethrough for the R, G and B components are all preferably equal in length.

Prisms 226, 228 and 230 are commercially available in a block from Continental Optical Corporation of Hauppauge, New York. Preferably an air gap is maintained between prisms 226 and 228, while no air gap need be maintained between prisms 228 and 230.

Disposed intermediate prisms 226 and 228, on a surface 229 of prism 226, is a dichroic multilayer layer coating 232 which is operative to separate the B component from the R and G components. Disposed intermediate prisms 228 and 230, on a surface 231 of prism 228, is a dichroic multilayer layer coating 234 which is operative to separate the R and G components from one another.

Light, such as beam 220, which impinges on a surface 236 of prism 226, as seen in Fig. 6, is separated by coating 232 into a B component, which is reflected toward surface 236 of prism 226 and is totally internally reflected thereat, and R and G components which traverse the coating. The B component exits prism 226 and impinges on a light valve 227, such as a liquid crystal light valve operative in a reflective mode.

The R and G components impinge on a surface 231 of prism 228, on which is formed coating 234. These two components are separated by coating 234 into a R component, which is reflected toward surface 240 of prism 228 and is totally internally reflected thereat, and a G component which traverses the coating. The R component exits prism 228 and impinges on a light valve 242, such as a liquid crystal light valve operative in a reflective mode.

The G component passes through prism 230 and impinges on a light valve 244, such as a liquid crystal light valve operative in a reflective mode.

The first total internal reflection dichroic RGB separator/combiner 222 thus receives light of a first polarity from the polarizing beam splitter 212, while the second total internal reflection dichroic RGB separator/combiner 224 receives light of a second polarity, typically, but not necessarily, orthogonal to said first polarity, from the polarizing beam splitter 212.

The light valves employed in the embodiment of Figs. 6 and 7, are commercially available from S-Vision Inc. of Santa Clara, California, U.S.A.

It is appreciated that the modulation produced by the light valves may be such that time-interlaced modulation of images is provided. Such time-interlaced modulation may be employed, for example, for projecting time-interlaced stereo images which can be viewed by persons wearing glasses having time-interlaced shutters.

It is appreciated that the first and second total internal reflection dichroic RGB separator/combiners 222 and 224 operate not only as color splitters but also as color combiners.

As may be appreciated from a consideration of Figs. 6 & 7, first total internal reflection dichroic RGB separator/combiner 222 is operative to spectrally split beam 220 into R, G and B components, respectively indicated by arrows 250, 252 and 254. These components impinge on respective reflective light valves which modulate the light impinging thereon and reflect the modulated light beams, respectively indicated by arrows 260, 262 and 264 back through the first total internal reflection dichroic RGB separator/combiner 222, which combines the modulated components and transmit a combined beam, indicated by arrow 256, back to polarizing beam splitter/combiner 212.

Similarly, second total internal reflection dichroic RGB separator/combiner 224 is operative to spectrally split beam 218 into R, G and B components. These components impinge on respective reflective light valves which modulate the light impinging thereon and reflect it back through the second total internal reflection dichroic RGB separator/combiner 224, which combines the modulated components and transmit a combined beam, indicated by arrow 268, back to polarizing beam splitter/combiner 214.

It is noted that while in the embodiment of Fig. 1, the first, second and third light valves are rotated about their respective optical axes relative to said fourth, fifth and sixth light valves respectively by 90 degrees and the first and second color splitters are rotated relative to each other about their respective optical axes by 90 degrees, this is not necessary in the embodiment of Figs. 6 and 7.

The polarizing beam splitter/combiner combines beams 266 and 268 and directs them to an objective lens 270, which outputs the combined modulated light beams.

The embodiment of Figs. 6 and 7, which is described hereinabove, has a number of advantages over the embodiment of Fig. 1:

The total internal reflection dichroic RGB separator/combiner employing prisms 226, 228 and 230, as shown in Figs. 6 and 7 is not sensitive to the polarity of the R,G,B components of light passing therethrough.

Therefore the contrast and efficiency provided by the total internal reflection dichroic RGB separator/combiner is not affected.

It will be appreciated by persons skilled in the art that the present invention is not limited by what has been particularly shown and described hereinabove. Rather the scope of the present invention include both combinations and sub-combinations of the various features described hereinabove as well as variations and modifications of such features as would occur to a person skilled in the art upon reading the description and which are not in the prior art.

## Claims

1. A projector comprising:
a light source;
a polarizing beam splitter receiving light from said light source;
a first color splitter receiving light of a first polarity from said polarizing beam splitter;
a second color splitter receiving light of a second polarity from said polarizing beam splitter;
first, second and third reflective light valves operatively associated with said first color splitter for modulating respective R, G and B components of light of said first polarity;
fourth, fifth and sixth reflective light valves operatively associated with said second color splitter for modulating respective R, G and B components of light of said second polarity; and
an objective lens arranged to receive light reflected from said first, second, third, fourth, fifth and sixth reflective light valves.

2. A projector according to claim 1 and wherein said polarizing beam splitter comprises first and second prisms separated by a liquid crystal material.

3. A projector according to claim 1 and wherein said first and second color splitters are rotated relative to each other about their respective optical axes by 90 degrees and said first, second and third light valves are rotated about their respective optical axes relative to said fourth, fifth and sixth light valves respectively by 90 degrees.

4. A projector according to claim 2 and wherein said first and second color splitters are rotated relative to each other about their respective optical axes by 90 degrees and said first, second and third light valves are rotated about their respective optical axes relative to said fourth, fifth and sixth light valves respectively by 90 degrees.

5. A projector according to claim 1 and also comprising a half wave plate disposed between one of said first and second color splitters and said polarizing beam splitter.

6. A projector according to claim 2 and also comprising a half wave plate disposed between one of said first and second color splitters and said polarizing beam splitter.

7. A projector according to claim 1 and wherein said first and second color splitters comprise first and second total internal reflection dichroic RGB separator/combiners.

8. A projector according to claim 2 and wherein said first and second color splitters comprise first and second total internal reflection dichroic RGB separator/combiners.

9. A projector according to claim 1 and wherein said first, second and third light valves are operative to modulate a first image corresponding to a right eye image of a stereo image and said fourth, fifth and sixth light valves are operative to modulate a second image corresponding to a left eye image of a stereo image.

10. A projector according to claim 9 and wherein said first image and said second image are time-interlaced.

11. A projector according to claim 1 and wherein said first, second and third light valves are operative to modulate a first image portion and said fourth, fifth and sixth light valves are operative to modulate a second image portion and wherein said first, second and third light valves are positioned relative to said fourth, fifth and sixth light valves and to said polarizing beam splitter so as to cause said first and second image portions to be interlaced.

12. A projector according to claim 1 and wherein said first and second polarities are mutually orthogonal.
